Europäisches Patentamt

European Patent Office

Office européen des brevets

(11) Veröffentlichungsnummer: **0 039 934**
**B1**

(12) **EUROPÄISCHE PATENTSCHRIFT**

(45) Veröffentlichungstag der Patentschrift:
15.02.84

(51) Int. Cl.³: **B 60 B 3/02,** B 60 B 3/16

(21) Anmeldenummer: **81103550.0**

(22) Anmeldetag: **09.05.81**

(54) **Fahrzeugrad.**

(30) Priorität: **14.05.80 CH 3774/80**

(43) Veröffentlichungstag der Anmeldung:
**18.11.81 Patentblatt 81/46**

(45) Bekanntmachung des Hinweises auf die Patenterteilung:
**15.02.84 Patentblatt 84/7**

(84) Benannte Vertragsstaaten:
**DE FR GB IT SE**

(56) Entgegenhaltungen:
**DE - A - 2 635 983**
**DE - B - 1 013 980**
**US - A - 2 424 106**

(73) Patentinhaber: **GEORG FISCHER
AKTIENGESELLSCHAFT, Mühlentalstrasse 105,
CH-8201 Schaffhausen (CH)**

(72) Erfinder: **Rohr, Jakob, Bachtelstrasse 26,
CH-8200 Schaffhausen (CH)**

ACTORUM AG

## Fahrzeugrad

Die Erfindung betrifft ein Fahrzeugrad mit einer Felge und einer einstückig damit verbundenen Radschüssel, die einen Bolzenlöcher aufweisenden Flansch aufweist.

Aus der DE-OS 24 42 785 ist ein gegossenes, einschlägiges Fahrzeugrad bekannt, dessen gesamte, äussere Flanschseite als ringförmige, ebene Auflagefläche dient. Insbesondere bei Zwillingsradanordnungen, bei denen die äusseren Flanschseiten zweier Räder aneinander anliegen, können die Bereiche zwischen den Bolzen durch Reibkorrosion (Walken) aufschwellen (Vergrösserung des Volumens infolge Oxidation), was Bolzenbrüche verursachen kann. Auch zwischen der inneren Flanschseite und der daran anliegenden Bremstrommel kann Reibkorrosion solche Schäden verursachen. Bei radialer Zentrierung auf das Mittenloch, wo die innere radiale Stirnfläche des Flansches an der Nabe anliegt, treten oftmals Korrosionsschäden durch Passungsrostbildung auf, die zudem eine Demontage des Rades erschweren.

Es ist Aufgabe der vorliegenden Erfindung, hier Abhilfe zu schaffen und, ausgehend von einem Fahrzeugrad gemäss dem Stand der Technik, Schäden durch Korrosion zu vermeiden oder wenigstens beträchtlich herabzusetzen. Ausserdem soll eine Demontage des Rades vereinfacht werden.

Diese Aufgabe wird erfindungsgemäss gelöst durch die Lehre des 1. Patentanspruches. Vorteilhafte Weiterbildungen gehen aus den abhängigen Ansprüchen hervor.

Dadurch, dass die Auflageflächen der Augen gesamthaft viel kleiner sind als eine einzige ringförmige Auflagefläche gemäss dem Stand der Technik, die sich über die gesamte Flanschseite erstreckt, ergibt sich ein grösserer spezifischer Anpressdruck, was der Bildung von Reibkorrosion entgegenwirkt. Die Flanschdicke wird nicht beeinträchtigt.

Zwar ist aus der DE-OS 26 35 983 ebenfalls ein Fahrzeugrad bekannt, bei dem auch die totale Auflagefläche kleiner ist als die gesamte Flanschseite. Der Flansch weist hierbei an jeder Flanschseite zwei ringförmige, konzentrische Stege beidseits des Bolzenlochkreises auf, deren Auflageflächen in einer gemeinsamen, rechtwinklig zur Raddrehachse stehenden Ebene liegen, wobei diese Ebene die grösste axiale Ausdehnung an der jeweiligen Flanschseite begrenzt. Die Bereiche zwischen den Stegen sind zurückversetzt. Der Zweck ist, durch Anziehen der Bolzen bzw. der Muttern eine Verspannung und dadurch eine Federwirkung im Bolzenbereich des Flansches zu erzeugen, wodurch einem Lösen der Bolzen, wenigstens teilweise, entgegengewirkt werden soll. Durch das Vorhandensein der zwei Stege werden die Bereiche zwischen den Bolzenlöchern bezüglich Reibkorrosion aber ungünstig beeinflusst, da in diesen Bereichen mikroskopisch kleine Verschiebungen der Flanschfläche beim Rollen auftreten, die von der Belastung des Rades herkommen. In diesen Bereichen sollte möglichst überhaupt keine Berührung von Flansch und Nabe stattfinden. Obwohl der Steg kleinsten Durchmessers unterbrochen sein kann, befinden sich die Unterbrechungen bezüglich der Vermeidung von Reibkorrosion gerade an den ungünstigsten Stellen, nämlich im Bolzenbereich und die Stege zwischen den Bolzen. Günstigerweise sollte es umgekehrt sein, um die Auflagefläche dorthin zu legen wo keine Verschiebung stattfindet.

Die Erfindung wird nunmehr anhand einiger in der Zeichnung dargestellter Ausführungsbeispiele näher erläutert.

Es zeigen:

Fig. 1 eine Ansicht auf ein bekanntes Fahrzeugrad,

Fig. 2 einen Schnitt in vergrössertem Massstab gemäss Linie I-I der Fig. 1,

Fig. 3 einen Schnitt durch die Radschüssel eines erfindungsgemässen Rades gemäss Linie II-II der Fig. 4,

Fig. 4 eine Teilansicht einer ersten Ausführung gemäss der Erfindung, und

Fig. 5 eine Teilansicht einer zweiten, bevorzugten Ausführung gemäss der Erfindung.

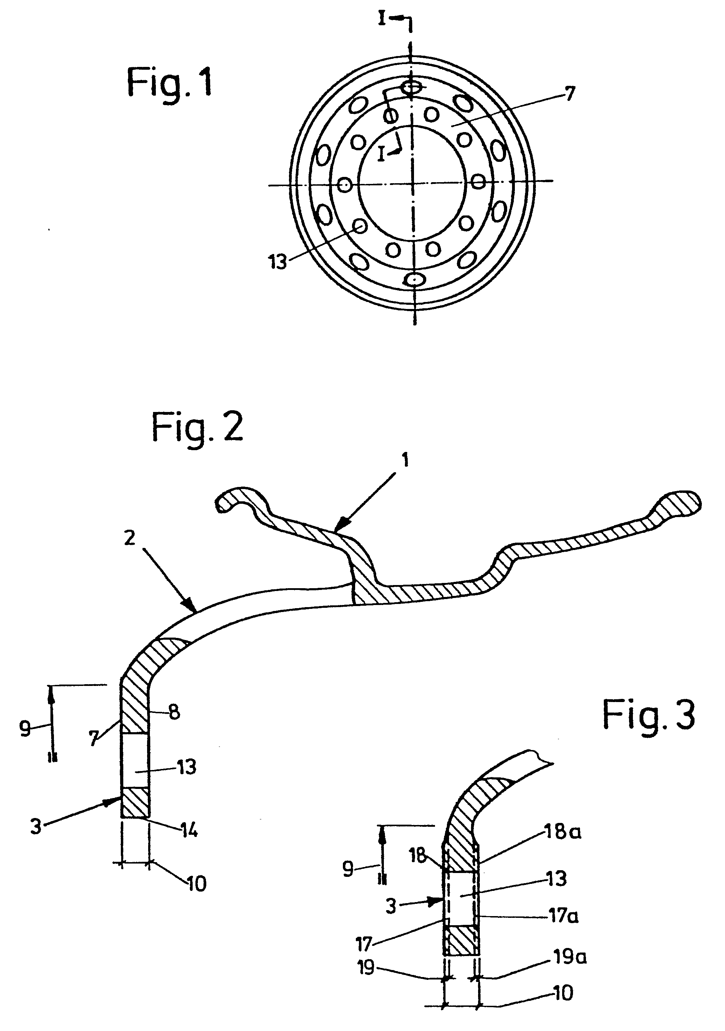

Fig. 1 und 2 zeigen ein gegossenes Fahrzeugrad mit Steilschultertiefbettfelge für schlauchlose Reifen, wobei die Felge 1 und die Radschüssel 2 einstückig miteinander verbunden sind. Die Radschüssel 2 weist einen Flansch 3 auf, dessen äussere Seite 7 und innere Seite 8 jeweils eine ringförmige, ebene Auflagefläche mit Aussendurchmesser 9 bilden. Der Flansch 3 hat eine Flanschdicke, die mit dem Bezugszeichen 10 angegeben ist. Diese Auflageflächen 7, 8 können gegebenenfalls spanabhebend bearbeitet sein. Bolzenlöcher 13 im Flansch 3 liegen auf einem Bolzenlochkreis, der koaxial mit dem kreisförmigen Mittenloch 14 verläuft. Die nicht dargestellte Nabe und die innere, radiale Stirnfläche des Flansches 3, die das Mittenloch 14 bildet, liegen über den ganzen Umfang des Mittenloches 14 aneinander an (Mittenlochzentrierung).

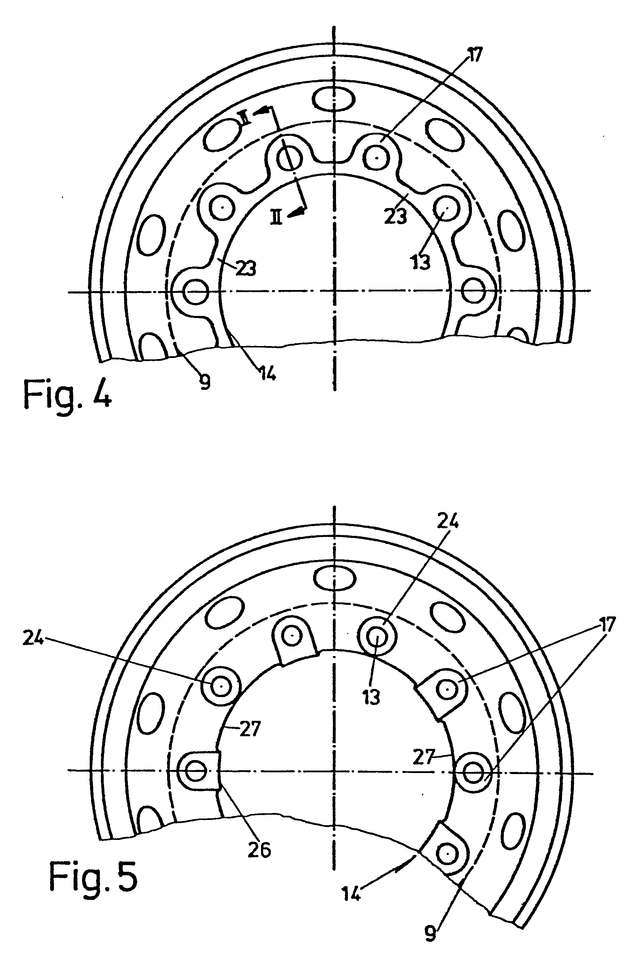

Fig. 3 und 4 zeigen eine Ausführungsform, die, verglichen mit dem Rad nach Fig. 1 und 2, eine beträchtlich kleinere, axiale Auflagefläche aufweist. Um die Bolzenlöcher 13 herum sind an der äusseren Flanschseite 7 einstückig am Flansch 3 angeformte Flanschverdickungen 17, Augen genannt, vorgesehen. Die Augen 17 haben Auflageflächen 18, die in einer gemeinsamen, rechtwinklig zur Raddrehachse stehenden Ebene liegen und die die grösste axiale Ausdehnung des Flansches 3 an dessen äusseren Seite 7 darstellen. Die Dicke 19 eines Auges 17 sollte zweckmässigerweise zwischen 0,5 mm und 5 mm liegen, vorzugsweise beträgt sie 3 mm. Die Gesamtdicke bzw. die grösste axiale Gesamtausdehnung des Flansches beim Vorhandensein von Augen 17 bleibt dabei gleich gross wie beim bekannten Flansch nach Fig. 2. Es sind auch an der inneren Flanschseite 8 mit den Augen 17 korrespondierende Augen 17a mit einer Dicke 19a möglich, deren Auflageflächen 18a wieder in einer gemeinsamen Ebene liegen. Vorzugsweise sind die Dicken 19 und 19a identisch. Auch in diesem Fall bleibt die Gesamtdicke des Flansches gleich gross wie beim bekannten Flansch nach Fig. 2.

Wie Fig. 4 zeigt, sind in Umfangsrichtung aufeinanderfolgende Augen 17 jeweils über Stege 23 miteinander verbunden. Diese Stege 23 liegen im Bereich des Mittenloches 14 und haben Auflageflächen, die in derselben Ebene wie die Auflageflächen 18 der Augen 17 liegen. Dasselbe gilt auch für die innere Flanschseite.

Die Stege 23 fehlen gänzlich bei der Ausführung gemäss Fig. 5, so dass die Auflageflächen 18 der Augen 17 voneinander getrennt sind. Dasselbe gilt auch für die Auflageflächen 18a und die Augen 17a. Bei dieser Ausführung kann Reibkorrosion praktisch überhaupt nicht auftreten. Jedes zweite Auge 17 hat eine axiale Auflagefläche 18, die ringförmig gestaltet ist und mit dem Bezugszeichen 24 versehen ist, während die Augen 17 dazwischen auch radiale Zentrierflächen 26 aufweisen, deren Länge, in Umfangsrichtung des Mittenloches 14 gesehen, etwa dem Aussendurchmesser einer ringförmigen Auflagefläche 24 entspricht. Es sind hier fünf Zentrierflächen 26 vorgesehen, die alle auf dem Kreisumfang des Mittenloches 14 liegen. Zwischen den Zentrierflächen 26 befinden sich radiale Aussparungen 27, die etwa 2 bis 3 mm zurückversetzt sind. Dadurch kann in den zurückversetzten Bereichen keine Korrosion durch Passungsrostbildung entstehen. Dies wiederum bewirkt, dass eine Demontage eines Rades einfacher vor sich geht, da ein Festrosten zwischen Rad und Nabe weitgehend vermieden wird.

## Patentansprüche

1. Fahrzeugrad mit einer Felge (1) und einer einstückig damit verbundenen Radschüssel (2), die einen Bolzenlöcher aufweisenden Flansch (3) enthält, wobei wenigstens an einer Flanschseite (7) einstückig angeformte Augen (17) um die Bolzenlöcher (13) vorgesehen sind, deren Auflageflächen (18) in einer gemeinsamen Ebene liegen, dadurch gekennzeichnet, dass diese Ebene höher liegt als die Flanschebene.

2. Fahrzeugrad nach Anspruch 1, dadurch gekennzeichnet, dass die Erhöhung (19) der Augen (17) zwischen 0,5 mm und 5 mm beträgt.

3. Fahrzeugrad nach Anspruch 1 oder Anspruch 2, dadurch gekennzeichnet, dass die Augen (17) über im Bereich des Mittenloches (14) angeordnete Stege (23) miteinander verbunden sind und dass die Stege Auflageflächen haben, die in derselben Ebene wie die Auflageflächen (18) der Augen (17) liegen (Fig. 4).

4. Fahrzeugrad nach Anspruch 1 oder Anspruch 2, dadurch gekennzeichnet, dass die Auflageflächen (18) der Augen (17) einer jeden Flanschseite (7) voneinander getrennt sind (Fig. 5).

5. Fahrzeugrad nach Anspruch 4, dadurch gekennzeichnet, dass mindestens einige Augen radiale Zentrierflächen (26) aufweisen und dass zwischen diesen Zentrierflächen radiale Aussparungen (27) vorhanden sind.

6. Fahrzeugrad nach Anspruch 5, dadurch gekennzeichnet, dass in Umfangsrichtung des Mittenloches (14) jedes zweite Auge eine radiale Zentrierfläche (26) aufweist.

7. Fahrzeugrad nach Anspruch 6, dadurch gekennzeichnet, dass fünf Zentrierflächen (26) vorhanden sind.

8. Fahrzeugrad nach Anspruch 5, 6 oder 7, dadurch gekennzeichnet, dass die keine Zentrierflächen aufweisenden Augen eine ringförmige Auflagefläche (24) haben.

9. Fahrzeugrad nach Anspruch 8, dadurch gekennzeichnet, dass die Länge jeder Zentrierfläche (26) in Umfangsrichtung des Mittenloches (14) etwa dem Aussendurchmesser einer ringförmigen Auflagefläche (24) entspricht.

10. Fahrzeugrad nach einem der Ansprüche 1 bis 9, dadurch gekennzeichnet, dass die Dicke (19) der Augen (17) 3 mm beträgt.

## Claims

1. Vehicle wheel having a rim (1) and a dished wheel centre (2) connected thereto to form one piece, which dished centre comprises a flange (3) having stud apertures, there being provided around the stud apertures (13) eyelets (17) moulded in one piece to at least one flange side (7), the bearing surfaces (18) of which apertures (13) lie in a common plane, characterised in that this plane is higher than the flange plane.

2. Vehicle wheel according to claim 1, characterised in that the distance (19) by which the eyelets (17) are raised is between 0.5 mm and 5 mm.

3. Vehicle wheel according to claim 1 or claim 2, characterised in that the eyelets (17) are connected to each other by means of link pieces (23) arranged in the area of the central aperture (14), and in that the link pieces have bearing surfaces, which lie in the same plane as the bearing surfaces (18) of the eyelets (17) (fig. 4).

4. Vehicle wheel according to claim 1 or claim 2, characterised in that the bearing surfaces (18) of the eyelets (17) of each flange side (7) are separated from each other (fig. 5).

5. Vehicle wheel according to claim 4, characterisde in that at least some of the eyelets comprise radial centering surfaces (26), and in that radial recesses (27) are provided between these centering surfaces.

6. Vehicle wheel according to claim 5, characterised in that each second eyelet in the peripheral direction of the central aperture (14) has a radial centering surface (26).

7. Vehicle wheel according to claim 6, characterised in that five centering surfaces (26) are provided.

8. Vehicle wheel according to claim 5, 6 or 7, characterised in that eyelets without any centering surfaces have an annular bearing surface (24).

9. Vehicle wheel according to claim 8, characterised in that the length of each centering surface (26) in the peripheral direction of the central aperture (14) corresponds approximately to the outer diameter of an annular bearing surface (24).

10. Vehicle wheel according to one of the claims 1 to 9, characterised in that the distance (19) by which the eyelets (17) are raised is 3 mm.

**Revendications**

1. Roue de véhicule comprenant une jante (1) et un voile de roue (2) relié à cette jante en une seule pièce, qui comprend une collerette (3) qui présente des trous de vis, dans laquelle il est prévu au moins sur une face (7) de la collerette des œillets (17) venus d'une seule pièce, autour des trous de vis (13), et dont les surfaces de portée (18) sont situées dans un plan commun, caractérisée en ce que ce plan se situe à un niveau surélevé au-dessus du plan de la collerette.

2. Roue de véhicule selon la revendication 1, caractérisée en ce que la surélévation (19) des œillets (17) est comprise entre 0,5 mm et 5 mm.

3. Roue de véhicule selon la revendication 1 ou 2, caractérisée en ce que les œillets (17) sont reliés les uns aux autres par des parties pleines (23) disposées dans la région du trou central (14) et en ce que les parties pleines présentent des surfaces de portée qui se trouvent dans le même plan que les surfaces de portée (18) des œillets (17) (fig. 4).

4. Roue de véhicule selon la revendication 1 ou 2, caractérisée en ce que les surfaces de portée (18) des œillets (17) de chaque face (7) de la collerette sont séparées les unes des autres (fig. 5).

5. Roue de véhicule selon la revendication 4, caractérisée en ce qu'au moins certains œillets présentent des surfaces de centrage radiales (26) et en ce que les évidements radiaux (27) sont prévus entre ces surfaces de centrage.

6. Roue de véhicule selon la revendication 5, caractérisée en ce qu'un œillet sur deux, considéré dans la direction circonférentielle du trou central (14), présente une surface de central radial (26).

7. Roue de véhicule selon la revendication 6, caractérisée en ce qu'elle comporte cinq surfaces de centrage (26).

8. Roue de véhicule selon la revendication 5, 6 ou 7, caractérisée en ce que les œillets qui ne présentent pas de surface de centrage ont une surface de portée annulaire (24).

9. Roue de véhicule selon la revendication 8, caractérisée en ce que la longueur de chaque surface de centrage (26) mesurée dans la direction circonférentielle du trou central (14) correspond à peu près au diamètre extérieur d'une surface de portée annulaire (24).

10. Roue de véhicule selon l'une des revendications 1 à 9, caractérisée en ce que la surélévation (19) des œillets (17) se monte à 3 mm.

Fig. 1

Fig. 2

Fig. 3

Fig. 4

Fig. 5